# FASCICULE DE BREVET EUROPEEN

(11) **EP 1 539 454 B1**
(45) Date de publication et mention de la délivrance du brevet: **15.03.2006**
(21) Numéro de dépôt: 03760773.6
(22) Date de dépôt: 23.06.2003
(51) Int. Cl.: B29C 45/00

(54) **SYSTEME ET PROCEDE DE MOULAGE ET D'ASEMBLAGE D'UN DISPOSITIF DE PULVERISATION DE PRODUIT FLUIDE**
SYSTEM UND VERFAHREN ZUM FORMEN UND ZUSAMMENFÜGEN EINER FLUIDPRODUKT-SPRAYVORRICHTUNG
SYSTEM AND METHOD OF MOULDING AND ASSEMBLING A FLUID PRODUCT SPRAY DEVICE

(30) Priorité: 24.06.2002 FR 0207804
(43) Date de publication de la demande: 15.06.2005
(73) Titulaire: Valois SAS, 27110 Le Neubourg (FR)
(72) Inventeur: DEROUET, André, F-78200 Perdreauville (FR)
(74) Mandataire: CAPRI
(86) Numéro de dépôt international: PCT/FR2003/001920
(87) Numéro de publication internationale: WO 2004/000523

(56) Documents cités:
- EP-A- 1 060 868
- WO-A-02/36319
- WO-A-93/13927
- GB-A- 701 452
- US-A- 4 295 814
- PATENT ABSTRACTS OF JAPAN vol. 1998, no. 11, 30 septembre 1998 (1998-09-30) -& JP 10 175230 A (NISSEI PLASTICS IND CO), 30 juin 1998 (1998-06-30) cité dans la demande
- PATENT ABSTRACTS OF JAPAN vol. 9, no. 77 (M-369), 6 avril 1985 (1985-04-06) -& JP 59 207303 A (SAILOR PEN CO LTD), 24 novembre 1984 (1984-11-24) cité dans la demande -& DATABASE WPI Week 198502 Derwent Publications Ltd., London, GB; AN 1985-009096 XP002233411 & JP 59 207303 A

## Description

La présente invention concerne un système et procédé de moulage et d'assemblage d'un dispositif de pulvérisation de produit fluide.

Dans l'état de la technique, deux pièces à assembler, par exemple un gicleur interne sous la forme d'un insert ou d'une tige à monter dans le canal d'expulsion d'une tête de distribution, telle qu'une tête de distribution nasale, sont d'abord moulées dans des moules respectifs, puis transférées du moule vers une unité d'assemblage. Au niveau industriel, les moules sont généralement des moules multi-empreintes permettant de mouler simultanément un grand nombre de pièces identiques dans chaque moule. Lors de l'assemblage subséquent, l'empreinte de laquelle est issue chaque pièce n'est pas déterminée, et l'assemblage est réalisé de manière aléatoire entre les différentes empreintes des deux pièces à assembler. Même si chaque empreinte d'un moule multi-empreintes permet de réaliser une pièce répondant aux exigences prédéterminées concernant les diverses propriétés de ladite pièce (dimension, ...), il existe bien entendu des petites différences liées aux tolérances de fabrication et de moulage. Il s'en suit que le dispositif final assemblé présente des variations de performance, en particulier en ce qui concerne la pulvérisation, lesdites variations étant non négligeables, et impossible à prédéterminer.

Les documents EP-1 060 868, WO 02/36319 et JP-10 175 230 divulguent des moules rotatifs permettant de mouler des pièces creuses différentes et de les souder ensemble après rotation d'un moule. Les documents GB-701 452 et JP-59 207 303 divulguent des moules multi-empreintes adaptés à mouler simultanément plusieurs empreintes reliées les unes aux autres par des liaisons de matière, puis d'assembler séparément lesdites empreintes dans un étape d'assemblage ultérieure.

Le but de la présente invention est de fournir un système et un procédé moulage et d'assemblage d'un dispositif de pulvérisation qui ne reproduit pas les inconvénients susmentionnés de l'état de la technique.

La présente invention a ainsi pour but de fournir un système et un procédé de moulage et d'assemblage d'au moins deux pièces différentes d'un dispositif de pulvérisation issues de moules multi-empreintes respectifs, où on peut prédéterminer de manière constante les caractéristiques et performances du dispositif assemblé, en particulier en ce qui concerne la pulvérisation.

La présente invention a également pour but de fournir un système et un procédé de moulage et d'assemblage qui soient simples et peu coûteux.

La présente invention a donc pour objet un système de moulage et d'assemblage d'un dispositif de pulvérisation de produit fluide, ledit système comportant deux moules multi-empreintes pour mouler deux pièces différentes dudit dispositif de distribution de produit fluide, caractérisé en ce que la première pièce est une tête de pulvérisation, et la seconde pièce est un insert destiné à être assemblé dans ladite tête, ledit système comportant des moyens pour assembler par paire chaque empreinte du premier moule multi-empreintes avec toujours la même empreinte respective dudit second moule multi-empreintes, de sorte que le même insert est toujours assemblé dans la même tête de pulvérisation, garantissant une constance de performances de pulvérisation pour chaque dispositif de distribution assemblé à partir des mêmes empreintes.

Selon un premier mode de réalisation avantageux de la présente invention, le moulage et l'assemblage de ladite tête et dudit insert sont réalisés dans une même unité de moulage et d'assemblage, ladite unité de moulage et d'assemblage comportant une première partie de moule et une seconde partie de moule déplaçables en translation l'une vers l'autre pour fermer et ouvrir l'unité de moulage et d'assemblage, chaque partie de moule comportant respectivement une plaque de noyau et une plaque de cavité définissant partiellement un premier moule multi-empreintes et un second moule multi-empreintes, au moins une desdites première et seconde parties de moule étant rotatives pour amener les pièces moulées dans le premier moule multi-empreintes en face des pièces moulées dans le second moule multi-empreintes, formant ainsi une zone d'assemblage, une fermeture de ladite unité de moulage et d'assemblage entraînant un assemblage desdites pièces moulées.

Selon une variante de réalisation, le moulage et l'assemblage de ladite tête et dudit insert sont réalisés dans une même unité de moulage et d'assemblage, ladite unité de moulage et d'assemblage comportant :
- une première partie de moule et une seconde partie de moule déplaçables en translation l'une vers l'autre pour fermer et ouvrir l'unité de moulage et d'assemblage,
- la première partie de moule définissant partiellement un premier moule multi-empreintes, et comportant une plaque de noyau définissant partiellement un second moule multi-empreintes, ladite plaque de noyau étant montée rotative autour de l'axe de translation de l'unité de moulage et d'assemblage, et la seconde partie de moule définissant partiellement le second moule multi-empreintes, et comportant une plaque de cavité définissant partiellement un premier moule multi-empreintes, ladite plaque de cavité étant montée rotative autour de l'axe de translation de l'unité de moulage et d'assemblage,
- la plaque de noyau étant décalée perpendiculairement à l'axe de translation de ladite unité de moulage et d'assemblage par rapport à la plaque de cavité, de telle sorte que les deux plaques sont partiellement situées l'une en face de l'autre pour définir une zone d'assemblage, et partiellement décalées l'une de l'autre pour définir les deux moules multi-empreintes respectifs.

Avantageusement, chacune des plaques de noyau et de cavité comporte au moins deux empreintes de moulage disposées de telle sorte que lorsque l'unité de moulage et d'assemblage est fermée, au moins un empreinte est située dans la zone d'assemblage et au moins une empreinte est située dans le moule multi-empreintes respectif.

Avantageusement, dans la zone d'assemblage, chaque empreinte de la plaque de noyau est toujours située en face de la même empreinte respective de la plaque de cavité.

Selon un second mode de réalisation de l'invention, chaque empreinte desdits moules multi-empreintes est repérée après moulage et stockée séparément des autres empreintes en vue de l'assemblage.

Avantageusement, chaque empreinte d'au moins un desdits moules multi-empreintes comporte des moyens d'orientation, de sorte que lors de l'assemblage, l'orientation angulaire de la tête par rapport à l'insert est toujours identique.

La présente invention a également pour objet un procédé de moulage et d'assemblage d'un dispositif de pulvérisation de produit fluide comportant deux pièces différentes, la première pièce étant une tête de pulvérisation, et la seconde pièce étant un insert destiné à être assemblé dans ladite tête, caractérisé en ce qu'il comprend les étapes suivantes :
(a) mouler ladite tête et ledit insert dans un moule multi-empreintes respectif, et
(b) assembler par paire chaque empreinte du premier moule multi-empreintes avec toujours la même empreinte respective du second moule multi-empreintes.

Selon un premier mode de réalisation avantageux de l'invention, le moulage et l'assemblage de ladite tête et dudit insert sont réalisés dans une même unité de moulage et d'assemblage comportant un moule multi-empreintes respectif pour chacune desdites pièces, ledit procédé comportant les étapes suivantes :
(a) fermer l'unité de moulage et d'assemblage pour mouler simultanément plusieurs empreintes de ladite tête et dudit insert dans les moules multi-empreintes de l'unité de moulage et d'assemblage,
(b) ouvrir l'unité de moulage et d'assemblage, chaque partie de l'unité de moulage et d'assemblage supportant l'une des deux pièces à assembler,
(c) déplacer les empreintes des deux pièces moulées les unes en face des autres dans une zone d'assemblage centrale de l'unité de moulage et d'assemblage, la même empreinte du premier moule multi-empreintes étant toujours face à la même empreinte du second moule multi-empreintes,
(d) refermer l'unité de moulage et d'assemblage pour d'une part assembler les pièces moulées dans la zone d'assemblage,
(e) ouvrir à nouveau l'unité de moulage et d'assemblage pour récupérer les dispositifs assemblés d'une part, et se retrouver à l'étape (b) d'autre part, et
(f) répéter les étapes (a) à (e) ci-dessus.

Avantageusement, simultanément à l'étape (d), l'unité de moulage et d'assemblage est adaptée à mouler des nouvelles empreintes de ladite tête et dudit insert dans les moules multi-empreintes de l'unité de moulage et d'assemblage.

Avantageusement, l'étape (c) est réalisée par rotation d'au moins une parmi deux plaques, une plaque de noyau supportant les empreintes de la tête, et une plaque de cavité supportant les empreintes de l'insert.

Selon un second mode de réalisation de l'invention, chaque empreinte desdites moules multi-empreintes est repérée après moulage et stockée séparément des autres empreintes en vue de l'assemblage.

D'autres caractéristiques et avantages de la présente invention apparaîtront plus clairement au cours de la description détaillée suivante, faite en référence aux dessins joints, donnés à titre d'exemples non limitatifs, et sur lesquels :
- la figure 1 est une vue schématique en coupe de dessus d'une unité de moulage et d'assemblage selon un premier mode de réalisation de la présente invention,
- les figures 2 à 7 sont des vues schématiques en section montrant les étapes successives du procédé de moulage et d'assemblage selon le premier mode de réalisation de la présente invention, et
- la figure 8 montre schématiquement un système et un procédé de moulage et d'assemblage selon un second mode de réalisation de la présente invention.

L'invention s'applique aux dispositifs comportant une tête de pulvérisation, pourvue d'un orifice de pulvérisation, un insert étant disposé dans la tête en amont dudit orifice. Avantageusement, l'insert et la tête définissent ensemble un canal d'expulsion et un profil de pulvérisation et déterminent les caractéristiques et les performances de la pulvérisation, tel que par exemple la forme, le débit et/ou la puissance du spray.

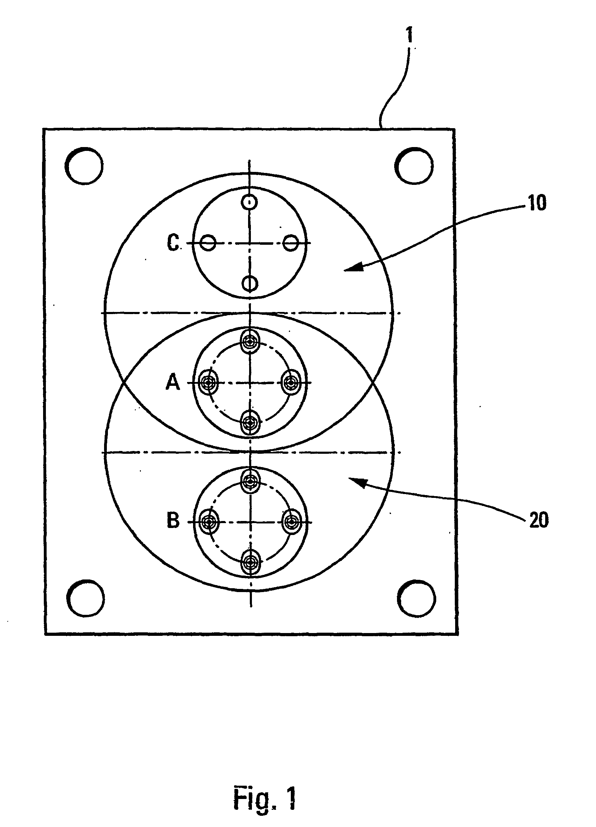

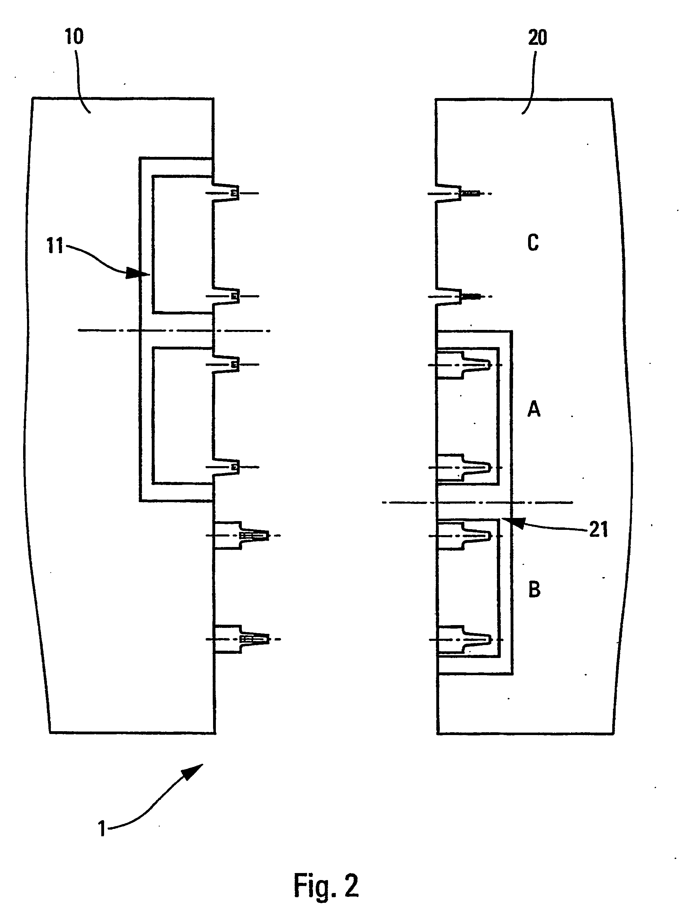

Les figures 1 à 7 montrent un système et un procédé de moulage et d'assemblage d'un dispositif de pulvérisation de produit fluide selon un premier mode de réalisation de la présente invention. Dans ce premier mode de réalisation, le moulage et l'assemblage sont réalisés successivement dans une même unité de moulage et d'assemblage 1. Cette unité de moulage et d'assemblage 1 comporte avantageusement une première partie de moule 10 et une seconde partie de moule 20, qui sont déplaçables en translation l'une vers l'autre pour fermer et ouvrir l'unité de moulage et d'assemblage. Comme visible sur la figure 2, la première partie de moule 10 peut définir partiellement un premier moule multi-empreintes B et comporter une plaque de noyau 11 définissant partiellement un second moule multi-empreintes C, ladite plaque de noyau 11 pouvant être montée rotative autour de l'axe de translation de l'unité de moulage et d'assemblage. De manière similaire, la seconde partie de moule 20 peut définir partiellement le second moule multi-empreintes C, et comporter une plaque de cavité 21, définissant partiellement le premier moule multi-empreintes B, ladite plaque de cavité 21 pouvant également être montée rotative autour de l'axe de translation de l'unité de moulage et d'assemblage. Par ailleurs, comme visible sur la figure 2, la plaque de noyau 11 est de préférence décalée perpendiculairement à l'axe de translation par rapport à la plaque de cavité 21, de telle sorte que les deux plaques 11 et 21 sont partiellement situées l'une en face de l'autre dans l'unité de moulage et d'assemblage 1 pour définir une zone d'assemblage A, et sont également partiellement décalées l'une de l'autre pour définir les deux moules multi-empreintes B et C.

La figure 1 montre schématiquement des moules multi-empreintes comportant chacun deux ensembles de quatre empreintes, mais il est entendu qu'un nombre quelconque d'empreintes peut être prévu dans chaque moule. Selon l'invention, l'assemblage est toujours réalisé de telle sorte que les deux pièces différentes 100, 200, à savoir la tête et l'insert, moulées séparément, sont assemblées par paire de telle sorte que chaque empreinte du premier moule multi-empreintes est toujours assemblée avec la même empreinte respective du second moule multi-empreintes. Ceci permet de prédéterminer les propriétés et les performances du dispositif assemblé pour chaque couple d'empreintes, puisque les deux pièces constitutives du dispositif assemblé sont toujours issues de la même empreinte de leur moule respectif. De même, l'orientation angulaire de la première pièce 100 par rapport à la seconde pièce 200 est toujours la même.

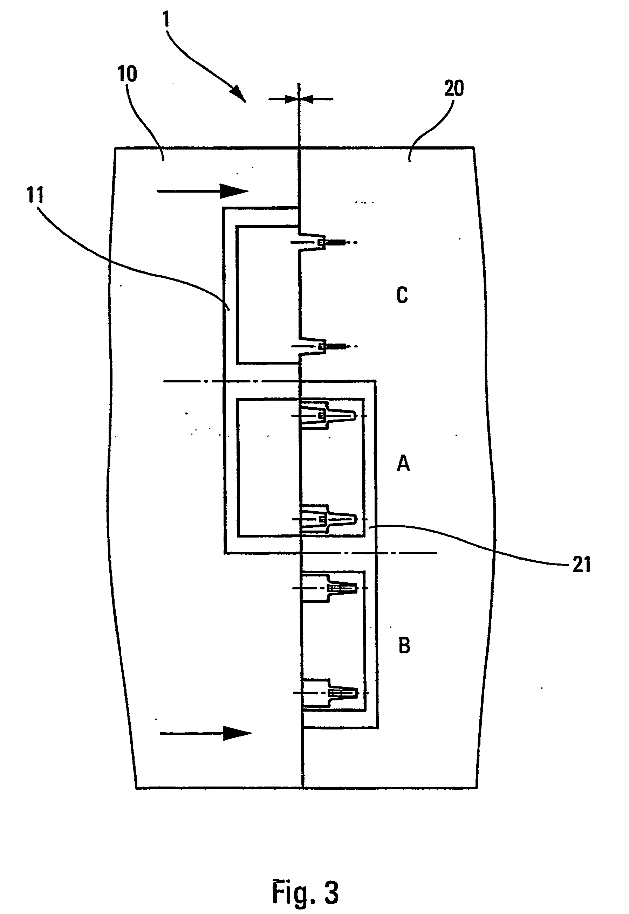

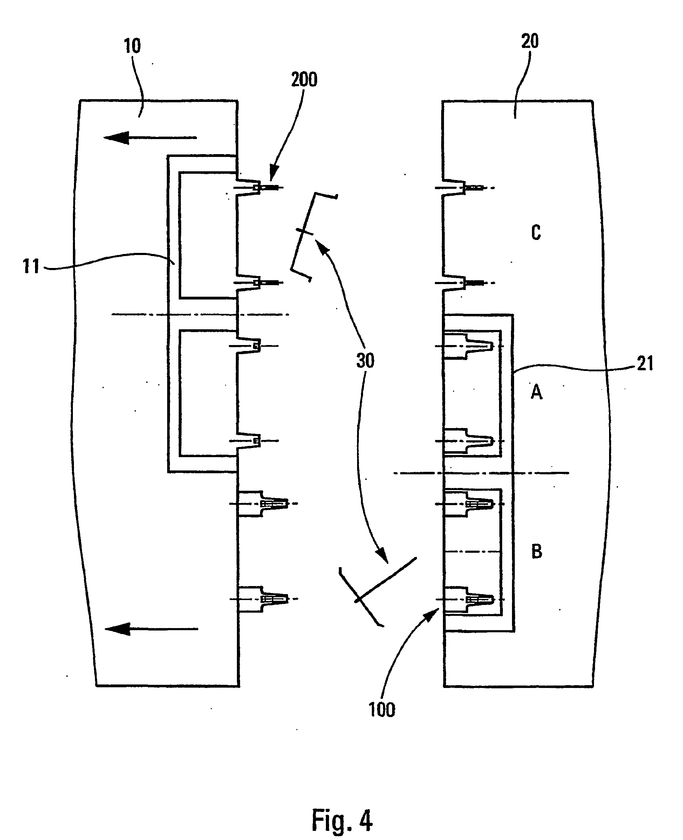

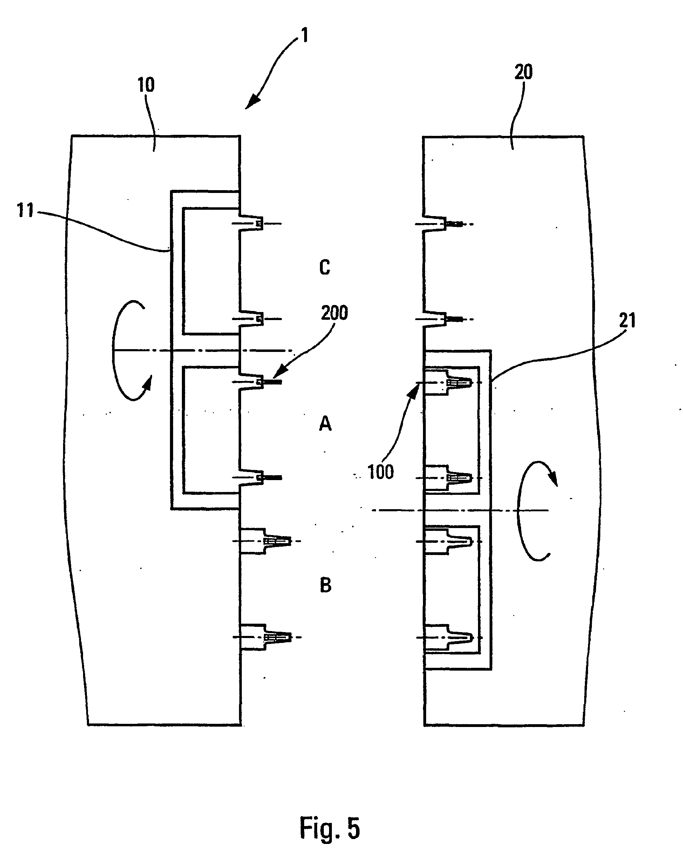

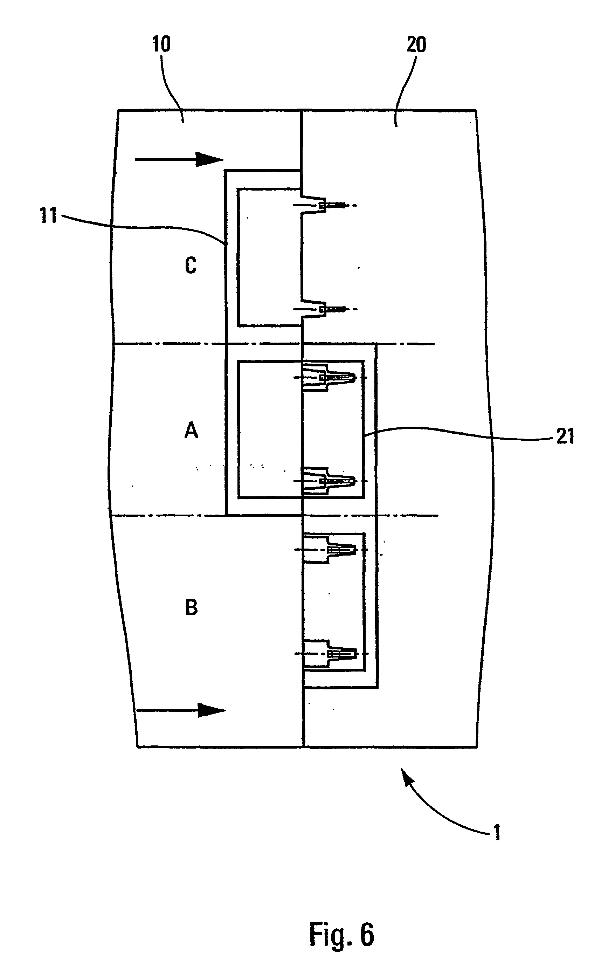

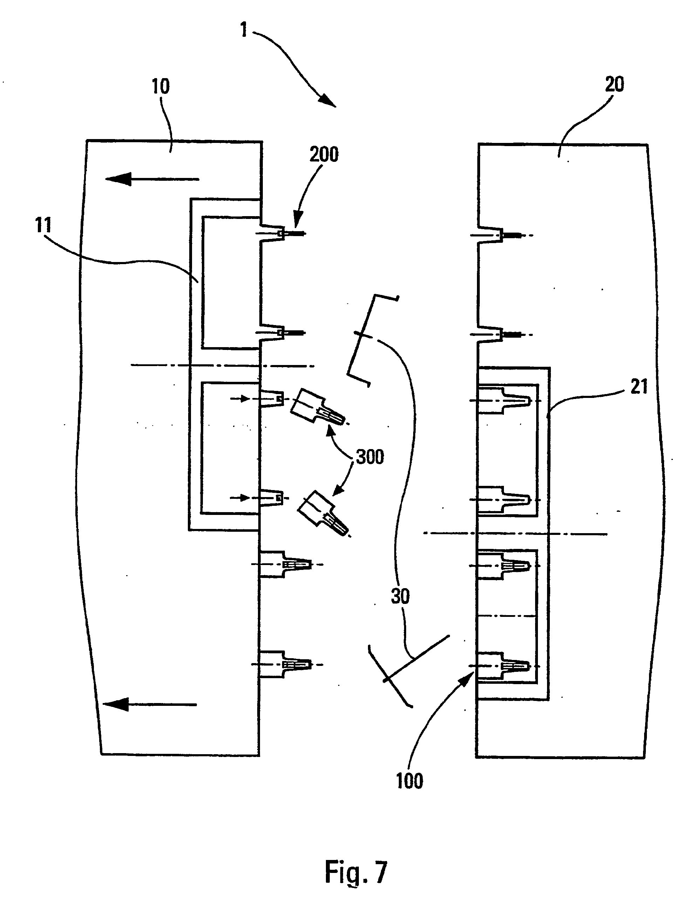

Les figures 2 à 7 vont maintenant être décrites pour expliciter le procédé de moulage et d'assemblage selon un mode de réalisation avantageux de l'invention. En se référant d'abord aux figures 2 et 3, l'unité de moulage et d'assemblage 1 est d'abord fermée et les deux pièces différentes 100, 200 du dispositif de distribution à assembler (en l'occurrence un gicleur interne 200 sous forme de tige ou d'insert, et une tête de pulvérisation nasale 100 dans laquelle ledit gicleur 200 doit être inséré) sont injectées dans les moules B et C de l'unité de moulage et d'assemblage. Comme visible sur la figure 4, l'unité de moulage et d'assemblage est ensuite ouverte en écartant la partie de noyau 10 de la partie de cavité 20 et les pertes 30 (également appelées carottes) sont éliminées. La première pièce moulée 100 (la tête de distribution) reste solidaire de la seconde partie de moule 20 de l'unité de moulage et d'assemblage, alors que la seconde pièce moulée 200 (le gicleur iriterne) reste solidaire de la première partie de moule 10 de ladite unité de moulage et d'assemblage 1. L'inverse est aussi envisageable. La plaque de noyau 11 et la plaque de cavité 21 sont alors tournées autour de l'axe de translation de l'unité de moulage et d'assemblage 1 pour amener au moins une tête moulée 100 en face d'au moins un insert moulé 200 dans la zone d'assemblage A, comme visible sur la figure 5. Selon l'invention, les plaques de noyau et de cavité forment partiellement les moules multi-empreintes, de sorte que plusieurs empreintes de la tête moulée 100 sont amenées dans la zone d'assemblage A, de même que plusieurs empreintes de l'insert moulé 200 sont amenées dans cette zone d'assemblage. L'invention garantit alors qu'à chaque cycle d'utilisation de l'unité de moulage et d'assemblage, chaque empreinte respective de la plaque de noyau 11 est toujours située en face de la même empreinte respective de la plaque de cavité 21, dans ladite zone d'assemblage A. De même, l'orientation angulaire respective desdites empreintes est toujours la même. L'unité de moulage et d'assemblage 1 est ensuite refermée, comme visible sur la figure 6 et il est alors réalisé l'assemblage des pièces moulées dans la zone d'assemblage A. Cet assemblage peut notamment être réalisé au moyen du système d'éjection de l'unité de moulage et d'assemblage, ce qui permet un assemblage sûr et fiable, l'assemblage étant en fait réalisé par l'éjection de l'insert dans la tête. Cette solution d'assemblage présente aussi l'avantage de s'effectuer sans effort, puisque c'est le retrait (compression volumétrique de la matière plastique) qui assure le serrage d'une pièce sur l'autre sans avoir à vaincre une interférence dimensionnelle comme dans un procédé d'assemblage traditionnel. Avantageusement, le moulage de nouvelles pièces 100 et 200 peut être réalisé simultanément dans les moules B et C de l'unité de moulage et d'assemblage 1. Dans ce cas, lorsque l'unité de moulage et d'assemblage 1 est à nouveau ouverte, comme visible sur la figure 7, les empreintes de la tête 100 sont à nouveau maintenues sur la plaque de cavité 21 et les empreintes de l'insert 200 sont maintenues sur la plaque de noyau 11. Les dispositifs assemblés 300 sont évacués de la zone d'assemblage A. Comme lors de l'étape décrite en référence à la figure 4, les pertes ou carottes 30 produites éventuellement pendant le processus de moulage sont également éliminées. En répétant ensuite les étapes décrites ci-dessus, on obtient une unité de moulage et d'assemblage qui permet de mouler et d'assembler deux pièces différentes, à savoir une tête de pulvérisation et un gicleur interne.

Dans ce premier mode de réalisation, le moulage et l'assemblage sont donc obtenus simultanément dans la même unité de moulage et d'assemblage, d'où gain de temps, de place, d'argent et donc d'efficacité. De plus, le positionnement des pièces à assembler est très précis ce qui élimine d'éventuels problèmes lors de l'assemblage.

Comme déjà expliqué précédemment, la capacité des plaques de noyau et de cavité 11 et 21, formant les moules multi-empreintes, peut être optimisée, par exemple en prévoyant huit, douze ou même plus d'empreintes sur chaque plaque, ou plusieurs jeux d'empreintes, par exemple quatre, qui nécessiteraient une rotation de 90° seulement lors de chaque cycle, contrairement au mode de réalisation décrit sur les figures 1 à 7, dans lequel une rotation de 180° des plaques de noyau et de cavité 11 et 21 est nécessaire pour réaliser le procédé de l'invention.

Comme expliqué précédemment, le moulage et l'assemblage peuvent être réalisés successivement ou simultanément, si l'unité de moulage et d'assemblage est adaptée à ce type de fonctionnement. De même, une seule partie de moule peut être rotative pour sélectivement réaliser le moulage puis l'assemblage, ou alors les deux parties de moules peuvent comporter des parties rotatives, comme représenté sur les dessins. Dans ce cas, on économise du temps de cycle, mais l'unité de moulage et d'assemblage est plus complexe car comportant deux parties rotatives.

Bien entendu, les pièces à assembler ne sont pas nécessairement celles données à titre d'exemple, à savoir un gicleur interne et une tête de pulvérisation nasale, mais pourraient être toute pièce interne venant s'assembler à l'intérieur d'une tête de pulvérisation quelconque (nasale, orale ou autre).

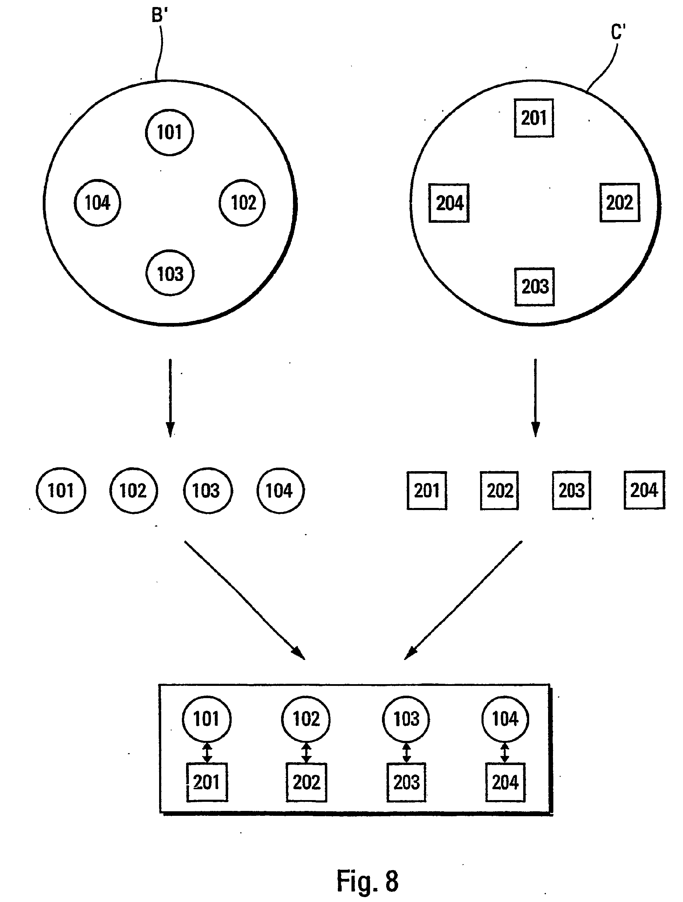

La figure 8 montre très schématiquement un second mode de réalisation du système et du procédé de moulage et d'assemblage selon la présente invention. Dans ce second mode de réalisation, le moulage et l'assemblage ne sont pas réalisés dans la même unité, mais séparément. Le moulage est d'abord réalisé dans des moules appropriés, puis les différentes pièces moulées sont réunies dans une unité d'assemblage pour y être assemblées. Selon l'invention, le système comprend au moins deux moules multi-empreintes B' et C' destinés chacun à mouler une pièce respective du dispositif. Dans l'exemple représenté, les moules sont schématiquement montrés avec quatre empreintes, mais il est évident qu'un nombre quelconque d'empreintes peut être prévu sur lesdits moules. Chaque empreinte obtenue à partir des moules respectifs B' et C' peut être stocké séparément après l'étape de moulage, de sorte que les différentes empreintes peuvent être alimentés de manière prédéterminée à l'unité d'assemblage 50, ce qui permet de toujours assembler ensemble les mêmes empreintes de chaque moule multi-empreintes respectif lors de ce processus d'assemblage. Ainsi, dans l'exemple représenté schématiquement sur la figure 8, lesdites empreintes de chaque moule multi-empreintes ont été numérotées, et l'empreinte x du premier moule B' est toujours assemblée avec l'empreinte x du second moule C', ce qui garantit la constance et la prédétermination des propriétés et des performances du dispositif assemblé, notamment en ce qui concerne la pulvérisation. Pour repérer les différentes empreintes après moulage, il n'est pas nécessaire de les stocker séparément, et on peut envisager en variante de marquer chaque empreinte, puis de détecter cette marque avant l'assemblage pour prédéterminer quelles empreintes seront assemblées ensemble.

Avantageusement, les empreintes d'au moins un desdits moules multi-empreintes B', C' comportent des moyens d'orientation, par exemple des marques ou repères détectables, pour garantir que lors de l'assemblage, l'orientation angulaire desdites premières pièces par rapport auxdites secondes pièces est toujours identique. De préférence, les empreintes des deux moules B', C' comportent de tels moyens d'orientation.

Comme précédemment, les pièces à assembler sont avantageusement des pièces d'un dispositif de pulvérisation de produit fluide tel qu'une tête de distribution nasale 101, 102, 103, 104 et un gicleur interne 201, 202, 203, 204. Bien entendu, d'autres pièces similaires peuvent être moulées et assemblées selon le même procédé de l'invention.

La présente invention permet donc d'optimiser le moulage et l'assemblage d'un dispositif de pulvérisation de produit fluide, en procurant une prédétermination des caractéristiques et performances des dispositifs assemblés, en particulier concernant la pulvérisation, indépendamment du nombre d'empreintes sur chaque moule, et des tolérances de fabrication existant toujours sur de tels moules multi-empreintes.

L'invention a été décrite ci-dessus en référence à deux modes de réalisation particuliers de celle-ci, mais il est clair que diverses modifications peuvent y être apportés par l'homme de l'art sans sortir du cadre de la présente invention telle que défini par les revendications annexées.

## Revendications

1. Système de moulage et d'assemblage d'un dispositif de pulvérisation de produit fluide, ledit système comportant deux moules multi-empreintes (B, C ; B', C') pour mouler deux pièces différentes (100, 200) dudit dispositif de distribution de produit fluide, **caractérisé en ce que** la première pièce (100) est une tête de pulvérisation, et la seconde pièce (200) est un insert destiné à être assemblé dans ladite tête (100), ledit système comportant des moyens pour assembler par paire chaque empreinte du premier moule multi-empreintes (B ; B') avec toujours la même empreinte respective dudit second moule multi-empreintes (C ; C'), de sorte que le même insert (200) est toujours assemblé dans la même tête de pulvérisation, garantissant une constance de performances de pulvérisation pour chaque dispositif de distribution assemblé à partir des mêmes empreintes.

2. Système selon la revendication 1, dans lequel le moulage et l'assemblage de ladite tête et dudit insert (100, 200) sont réalisés dans une même unité de moulage et d'assemblage (1), ladite unité de moulage et d'assemblage (1) comportant :
- une première partie de moule (10) et une seconde partie de moule (20) déplaçables en translation l'une vers l'autre pour fermer et ouvrir l'unité de moulage et d'assemblage (1),
- chaque partie de moule (10, 20) comportant respectivement une plaque de noyau et une plaque de cavité définissant partiellement un premier moule multi-empreintes (B) et un second moule multi-empreintes (C),
- au moins une desdites première et seconde parties de moule (10, 20) étant rotatives pour amener les pièces moulées dans le premier moule multi-empreintes (B) en face des pièces moulées dans le second moule multi-empreintes (C), formant ainsi une zone d'assemblage, une fermeture de ladite unité de moulage et d'assemblage (1) entraînant un assemblage desdites pièces moulées.

3. Système selon la revendication 1, dans lequel le moulage et l'assemblage de ladite tête et dudit insert (100, 200) sont réalisés dans une même unité de moulage et d'assemblage (1), ladite unité de moulage et d'assemblage (1) comportant :
- une première partie de moule (10) et une seconde partie de moule (20) déplaçables en translation l'une vers l'autre pour fermer et ouvrir l'unité de moulage et d'assemblage (1),
- la première partie de moule (10) définissant partiellement un premier moule multi-empreintes (B), et comportant une plaque de noyau (11) définissant partiellement un second moule multi-empreintes (C), ladite plaque de noyau (11) étant montée rotative autour de l'axe de translation de l'unité de moulage et d'assemblage (1), et la seconde partie de moule (20) définissant partiellement le second moule multi-empreintes (C), et comportant une plaque de cavité (21) définissant partiellement le premier moule multi-empreintes (B), ladite plaque de cavité (21) étant montée rotative autour de l'axe de translation de l'unité de moulage et d'assemblage (1),
- la plaque de noyau (11) étant décalée perpendiculairement à l'axe de translation de ladite unité de moulage et d'assemblage (1) par rapport à la plaque de cavité (21), de telle sorte que les deux plaques (11, 21) sont partiellement situées l'une en face de l'autre pour définir une zone d'assemblage (A), et partiellement décalées l'une de l'autre pour définir les deux moules multi-empreintes respectifs (B, C).

4. Système selon la revendication 3, dans lequel chacune des plaques de noyau (11) et de cavité (21) comporte au moins deux empreintes de moulage disposées de telle sorte que lorsque l'unité de moulage et d'assemblage (1) est fermée, au moins un empreinte est située dans la zone d'assemblage (A) et au moins une empreinte est située dans le moule multi-empreintes respectif (B, C).

5. Système selon l'une quelconque des revendication 2 à 4, dans lequel, dans la zone d'assemblage, chaque empreinte de la plaque de noyau (11) est toujours située en face de la même empreinte respective de la plaque de cavité (21).

6. Système selon la revendication 1, dans lequel chaque empreinte desdits moules multi-empreintes (B', C') est repérée après moulage et stockée séparément des autres empreintes en vue de l'assemblage.

7. Système selon la revendication 6, dans lequel chaque empreinte d'au moins un desdits moules multi-empreintes (B', C') comporte des moyens d'orientation, de sorte que lors de l'assemblage, l'orientation angulaire de la tête (100) par rapport à l'insert (200) est toujours identique.

8. Procédé de moulage et d'assemblage d'un dispositif de pulvérisation de produit fluide comportant deux pièces différentes (100, 200), la première pièce (100) étant une tête de pulvérisation, et la seconde pièce (200) étant un insert destiné à être assemblé dans ladite tête (100), **caractérisé en ce qu'**il comprend les étapes suivantes :
(a) mouler ladite tête et ledit insert (100, 200) dans un moule multi-empreintes respectif (B, C ; B', C'), et
(b) assembler par paire chaque empreinte du premier moule multi-empreintes (B ; B') avec toujours la même empreinte respective du second moule multi-empreintes (C ; C').

9. Procédé selon la revendication 8, dans lequel le moulage et l'assemblage de ladite tête et dudit insert (100, 200) sont réalisés dans une même unité de moulage et d'assemblage (1) comportant un moule multi-empreintes respectif (B, C) pour chacune desdites pièces (100, 200), ledit procédé comportant les étapes suivantes :
(a) fermer l'unité de moulage et d'assemblage pour mouler simultanément plusieurs empreintes de ladite tête et dudit insert (100, 200) dans les moules multi-empreintes (B, C) de l'unité de moulage et d'assemblage (1),
(b) ouvrir l'unité de moulage et d'assemblage (1), chaque partie (10, 20) de l'unité de moulage et d'assemblage (1) supportant l'une des deux pièces (100, 200) à assembler,
(c) déplacer les empreintes des deux pièces moulées (100, 200) les unes en face des autres dans une zone d'assemblage centrale (A) de l'unité de moulage et d'assemblage (1), la même empreinte du premier moule multi-empreintes (B) étant toujours face à la même empreinte du second moule multi-empreintes (C),
(d) refermer l'unité de moulage et d'assemblage (1) pour assembler les pièces moulées (100, 200) dans la zone d'assemblage (A),
(e) ouvrir à nouveau l'unité de moulage et d'assemblage (1) pour récupérer les dispositifs assemblés (300), et
(f) répéter les étapes (a) à (e) ci-dessus.

10. Procédé selon la revendication 9, dans lequel, simultanément à l'étape (d), l'unité de moulage et d'assemblage est adaptée à mouler des nouvelles empreintes de ladite tête et dudit insert (100, 200) dans les moules multi-empreintes (B, C) de l'unité de moulage et d'assemblage (1).

11. Procédé selon la revendication 9 ou 10, dans lequel l'étape (c) est réalisée par rotation d'au moins une parmi deux plaques (11, 21), une plaque de noyau (11) supportant les empreintes de la tête (100), et une plaque de cavité (21) supportant les empreintes de l'insert (200).

12. Procédé selon la revendication 8, dans lequel chaque empreinte desdits moules multi-empreintes (B', C') est repérée après moulage et stockée séparément des autres empreintes en vue de l'assemblage.

## Patentansprüche

1. System zum Formen und Zusammenfügen einer Fluidpodukt-Zerstäubungsvorrichtung, wobei das System zwei Mehrfachprägungsformen (B, C, B', C') zum Formen zwei unterschiedlicher Elemente (100 ,200) der Fluidprodukt-Abgabevorrichtung umfasst, **dadurch gekennzeichnet, dass** das erste Element (100) ein Zerstäubungskopf ist, während das zweite Element (200) ein Einsatz zum Einbauen in den Kopf (100) ist, wobei das System Mittel zum paarweise Zusammenfügen jeder Prägung der ersten Mehrfachprägungsform (B, B') mit stets der jeweils selben Prägung der zweiten Mehrfachprägungsform (C, C') umfasst, so dass ein und der selbe Einsatz (200) stets in ein und den selben Zerstäubungskopf eingebaut wird, wodurch konstantes Zerstäubbarkeit für jede zusammengefügte Abgabevorrichtung ausgehend von den selben Prägungen gewährleistet wird.

2. System nach Anspruch 1, wobei das Formen und Zusammenfügen des Kopfs (100) mit dem Einsatz (200) in ein und derselben Formungs- und Zusammenfügungseinheit verwirklicht wird, wobei die Formungs- und Zusammenfügungseinheit (1) aufweist:
- einen ersten Formteil (10) und einen zweiten Formteil (20), die aufeinander zu translationsmäßig verschiebbar sind, um die Formungs- und Zusammenfügungseinheit (1) zu schließen und zu öffnen,
- jeder Formteil (10, 20) jeweils eine Kernplatte und eine Hohlraumplatte umfasst, die teilweise eine erste Mehrfachprägungsform (B) und eine zweite Mehrfachprägungsform (C) festlegen,
- zumindest entweder der erste oder der zweite Formteil (10, 20) drehbar ist, um die mit der ersten Mehrfachprägungsform (B) geformten Elemente vor die geformten Elemente in der zweiten Mehrfachprägungsform (C) mitzunehmen, wodurch eine Zusammenfügungszone gebildet ist, wobei ein Schließen der Formungs- und Zusammenfügungseinheit (1) eine Zusammenfügen der geformten Elemente nach sich zieht.

3. System nach Anspruch 1, wobei das Formen und Zusammenfügen des Kopfes (100) mit dem Einsatz (200) in ein und derselben Formungs- und Zusammenfügungseinheit (1) erfolgt, wobei die Formungs- und Zusammenfügungseinheit (1) aufweist:
- einen ersten Formteil (10) und einen zweiten Formteil (20), die zum Schließen und Öffnen der Formungs- und Zusammenfügungseinheit (1) tranlationsmäßig aufeinander zu verschiebbar sind,
- wobei der erste Formteil (10) teilweise eine erste Mehrfachprägungsform (B) festlegt und eine Kernplatte (11) umfasst, welche teilweise eine zweite Mehrfachprägungsform (C) festlegt, wobei die Kernplatte (11) drehbar um die Translationsachse der Formungs- und Zusammenfügungseinheit (1) angebracht ist, und wobei der zweite Formteil (20) teilweise die zweite Mehrfachprägungsform (C) festlegt und eine Hohlraumplatte (21) umfasst, welche teilweise die erste Mehrfachprägungsform (B) festlegt, wobei die Hohlraumplatte (21) drehbar um die Translationsachse der Formungs- und Zusammenfügungseinheit (1) angebracht ist,
- wobei die Kernplatte (11) lotrecht zur Translationsachse der Formungs- und Zusammenfügungseinheit (1) in Bezug auf die Hohlraumplatte (21) versetzt ist, so dass die beiden Platten (11, 21) teilweise stirnseitig aufeinander zu weisend zu Liegen kommen, um eine Zusammenfügungszone (A) festzulegen, und teilweise in Bezug aufeinander versetzt sind, um die beiden jeweiligen Mehrfachprägungsformen (B, C) festzulegen.

4. System nach Anspruch 3, wobei sowohl die Kernplatte (11) wie die Hohlraumplatte (21) zumindest zwei Formungseinprägungen umfassen, die derart zu liegen kommen, dass dann, wenn die Formungs- und Zusammenfügungseinheit (1) geschlossen ist, zumindest eine Einprägung in der Zusammenfügungszone (A) zu liegen kommt, während zumindest eine Einprägung in der jeweiligen Mehrfachprägungsform (B, C) zu liegen kommen.

5. System nach einem der Ansprüche 2 bis 4, wobei in der Zusammenfügungszone jede Prägung der Kernplatte (11) stets in Gegenüberlage zu der jeweiligen Prägung der Hohlraumplatte (21) zu Liegen kommt.

6. System nach Anspruch 1, wobei jede Prägung der Mehrfachprägungsformen (B', C') nach der Formung im Hinblick auf die Zusammenfügung bezüglich der Zusammengehörigkeit markiert und getrennt von den anderen Prägungen bevorratet wird.

7. System nach Anspruch 6, wobei jede Prägung von zumindest einer der Mehrfachprägungsformen (B', C') Ausrichtungsmittel derart umfasst, dass bei der Zusammenfügung die winkelmäßige Ausrichtung des Kopfes (100) relativ zum Einsatz (200) stets identisch ist.

8. Verfahren zum Formen und Zusammenfügen einer Fluidprodukt-Zerstäubungsvorrichtung, die unterschiedliche Elemente (100, 200) aufweist, wobei das erste Element (100) ein Zerstäubungskopf ist, während das zweite Element (200) ein Einsatz zum Einbau in den Kopf (100) ist, **dadurch gekennzeichnet, dass** es folgende Schritte aufweist:
(a) Formen des Kopfes und des Einsatzes (100 ,200) in einer jeweiligen Mehrfachprägungsform (B, C, B', C'), und
(b) paarweises Zusammenfügen jeder Prägung der ersten Mehrfachprägungsform (B, B') mit stets derselben jeweiligen Prägung der zweiten Mehrfachprägungsform (C, C').

9. Verfahren nach Anspruch 8, wobei das Formen und Zusammenfügen des Kopfes und des Einsatzes (100, 200) in ein und er selben Formungs- und Zusammenfügungseinheit (1) erfolgt, welche eine jeweilige Mehrfachprägungsform (B, C) für jedes der Elemente (100 ,200) umfasst, wobei das Verfahren die folgenden Schritte aufweist:
(a) Schließen der Formungs- und Zusammenfügungseinheit (1) zum gleichzeitigen Formen mehrerer Prägungen des Kopfes und des Einsatzes (100 ,200) in die Mehrfachprägungsform (B, C) der Formungs- und Zusammenfügungseinheit (1),
(b) Öffnen der Formungs- und Zusammenfügungseinheit (1), wobei jeder Teil (10, 20) der Formungs- und Zusammenfügungseinheit (1) eines der zusammenzufügenden beiden Elemente (100 ,200) trägt,
(c) Verschieben der Prägungen der beiden geformten Elemente (100, 200), so dass diese aufeinander zu weisen, in einer zentralen Zusammenfügungszone (A) der Formungs- und Zusammenfügungseinheit (1), wobei ein und dieselbe Prägung der ersten Mehrfachprägungsform (b) stets sich in Gegenüberlage zur ein und derselben Prägung der zweiten Mehrfachprägungsform (C) befindet,
(d) Schließen der Formungs- und Zusammenfügungseinheit (1) zum Zusammenfügen der geformten Elemente (100, 200) in der Zusammenfügungszone (A),
(e) erneutes Öffnen der Formungs- und Zusammenfügungseinheit (1) zum Rückgewinnen der zusammengefügten Vorrichtungen (300) und
(f) Wiederholen der vorstehend genannten Schritte (a) bis (e).

10. Verfahren nach Anspruch 9, wobei gleichzeitig mit dem Schritt (d) die Formungs- und Zusammenfügungseinheit (1) dazu ausgelegt ist, neue Prägungen des Kopfes und des Einsatzes (100 ,200) in den Mehrfachprägungsformen (B, C) der Formungs- und Zusammenfügungseinheit (1) zu formen.

11. Verfahren nach Anspruch 9 oder 10, wobei der Schritt (c) durch Drehung von zumindest einer von zwei Platten (11, 21), einer Kernplatte (11), welche die Prägung des Kopfes (100) trägt, und einer Hohlraumplatte (21) erfolgt, welche die Prägungen des Einsatzes (200) trägt.

12. Verfahren nach Anspruch 8, wobei jede Prägung der Mehrfachprägungsformen (B', C') im Hinblick auf die Zusammenfügung nach der Formung rückgewonnen und getrennt von den andern Prägungen bevorratet wird.

## Claims

1. A system for molding and assembling a fluid spray device, said system comprising two multi-cavity molds (B, C; B'; C') for molding two different parts (100, 200) of said fluid dispenser device, the system being **characterized in that** the first part (100) is a spray head and the second part (200) is an insert for assembling in said spray head (100), said system comprising means for assembling parts coming from each of the cavities of the first multi-cavity mold (B; B') in pairs always with parts coming from a corresponding respective cavity of said second multi-cavity mold (C; C'), such that the same insert (200) is always assembled in the same spray head, thereby guaranteeing constant spraying performance for each dispenser device assembled from the same pair of cavities.

2. A system according to claim 1, in which the molding and assembly of said head and said insert (100, 200) are performed in a common molding and assembly unit (1), said molding and assembly unit (1) comprising:
· a first mold portion (10) and a second mold portion (20) that are movable in translation towards each other in order to close and open the molding and assembly unit (1);
· each mold portion (10, 20) respectively including a core plate or a cavity plate respectively defining parts of a first multi-cavity mold (B) and of a second multi-cavity mold (C);
· at least one of said first and second mold portions (10, 20) being rotatable in order to bring the parts molded in the first multi-cavity mold (B) up to the parts molded in the second multi-cavity mold (C), thereby forming an assembly zone, with closure of said molding and assembly unit (1) causing said molded parts to be assembled together.

3. A system according to claim 1, in which the molding and assembly of said head and said insert (100, 200) are performed in a common molding and assembly unit (1), said molding and assembly unit (1) comprising:
· a first mold portion (10) and a second mold portion (20) that are movable in translation towards each other to close and open the molding and assembly unit (1) ;
the first mold portion (10) defining part of a first multi-cavity mold (B), and including a core plate (11) defining part of a second multi-cavity mold (C), said core plate (11) being mounted to turn about the translation axis of the molding and assembly unit (1), and the second mold portion (20) defining part of a second multi-cavity mold (C), and including a cavity plate (21) defining part of the first multi-cavity mold (B), said cavity plate (21) being mounted to rotate about the translation axis of the molding and assembly unit (1); and
· the core plate (11) being offset perpendicularly from the translation axis of said molding and assembly unit (1) relative to the cavity plate (21) in such a manner that the two plates (11, 21) overlap each other in part so as to define an assembly zone (A), and are partially offset from each other so as to define the two respective multi-cavity molds (B, C).

4. A system according to claim 3, in which each of the core and cavity plates (11, 21) has at least two mold cavities disposed in such a manner that when the molding and assembly unit (1) is closed, at least one cavity is situated in the assembly zone (A) and at least one cavity is situated in the corresponding multi-cavity molds (B, C).

5. A system according to any one of claims 2 to 4, in which, in the assembly zone, each cavity of the core plate (11) is always situated facing the same corresponding cavity of the cavity plate (21).

6. A system according to claim 1, in which each part molded in said multi-cavity molds (B', C') is identified after molding and is stored separately from the other parts prior to assembly.

7. A system according to claim 6, in which each part of at least one of said multi-cavity molds (B', C') include orientation-defining means, such that during assembly, the angular orientation of the head (100) relative to the insert (200) is always identical.

8. A method of molding and assembling a fluid spray device comprising two different parts (100, 200), the first part (100) being a spray head and the second part (200) being an insert for assembling in said head (100), the method being **characterized in that** it comprises the following steps:
a) molding said head and said insert (100, 200) in respective multi-cavity molds (B, C; B', C'); and
b) assembling each part coming from a particular cavity of the first multi-cavity mold (B; B') always with a part coming from the same respective cavity of the second multi-cavity mold (C; C').

9. A method according to claim 8, in which said head and said insert (100, 200) are molded and assembled in a common molding and assembly unit (1) having respective multi-cavity molds (B, C) for each of said parts (100, 200), said method comprising the following steps:
a) closing the molding and assembly unit to mold simultaneously a plurality of said heads and said inserts (100, 200) in the multi-cavity (B, C) molds of the molding and assembly unit (1);
b) opening the molding and assembly unit (1), with each portion (10, 20) of the molding and assembly unit (1) supporting one of the kinds of part (100, 200) that are to be assembled together;
c) moving the cavities to bring the molded parts (100, 200) face to face in a central assembly zone (A) of the molding and assembly unit (1), with the same cavity in the first multi-cavity mold (B) always being brought to face the same cavity in the second multi-cavity mold (C);
d) closing the molding and assembly unit (1) to assembly together the molded parts (100, 200) in the assembly zone (A);
e) opening the molding and assembly unit (1) again in order to recover the assembled devices (300); and
f) repeating steps a) to e) above.

10. A method according to claim 9, in which, simultaneously with step d), the molding and assembly unit is adapted to mold new head and insert parts (100, 200) in the multi-cavity molds (B, C) of the molding and assembly unit (1).

11. A method according to claim 9 or claim 10, in which said step c) is implemented by turning at least one of the two plates (11, 21), comprising a core plate (11) supporting the cavities for molding the head (100), and a cavity plate (21) supporting the cavities for molding the insert (12).

12. A method according to claim 8, in which each part molded in a cavity of said multi-cavity molds (B', C') is identified after molding and stored separately from the parts molded in the other cavities prior to assembly.
